# EUROPÄISCHE PATENTSCHRIFT

(11) **EP 3 922 788 B1**
(45) Veröffentlichungstag und Bekanntmachung des Hinweises auf die Patenterteilung: **07.05.2025**
(21) Anmeldenummer: 21173580.8
(22) Anmeldetag: 12.05.2021
(51) Int. Cl.: E05B 19/00, E05B 21/06, E05B 15/14

(54) **SCHLÜSSELROHLING UND SCHLÜSSEL ZUM BETÄTIGEN EINES SCHEIBENZYLINDERS SOWIE VERFAHREN ZUM HERSTELLEN EINES SOLCHEN SCHLÜSSELROHLINGS UND SCHLÜSSELS**
KEY BLANK AND KEY FOR ACTUATING A CUTTING CYLINDER, AND METHOD FOR MANUFACTURING SUCH A KEY BLANK AND KEY
ÉBAUCHE DE CLÉ ET CLÉ DESTINÉE AU FONCTIONNEMENT D'UN CYLINDRE DE DISQUE, AINSI QUE PROCÉDÉ DE FABRICATION D'UNE TELLE ÉBAUCHE DE CLÉ ET DE CLÉ

(30) Priorität: 08.06.2020 DE 102020115134
(43) Veröffentlichungstag der Anmeldung: 15.12.2021
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 1 767 730
- EP-A2- 0 213 069
- US-A- 5 570 601
- US-A1- 2013 000 367

## Beschreibung

Die vorliegende Erfindung betrifft einen Schlüssel für einen Schließzylinder von der Bauart eines Scheibenzylinders und einen Schlüsselrohling zum Herstellen eines solchen Schlüssels. Ein Schlüsselrohling ist dazu vorgesehen, durch Anbringen von mehreren axial zueinander versetzten Antriebsschrägen bzw. Einschnitten - wie nachfolgend erläutert - einen Schlüssel für einen Scheibenzylinder herzustellen. Die Erfindung betrifft ferner ein Verfahren zur Herstellung solcher Schlüsselrohlinge sowie ein Verfahren zur Herstellung solcher Schlüssel.

Ein Scheibenzylinder umfasst ein Zylindergehäuse, einen im Zylindergehäuse um eine Zylinderachse drehbar gelagerten Zylinderkern, der in diesem Zusammenhang auch als Scheibengehäuse bezeichnet wird, und wenigstens einen am Außenumfang des Scheibengehäuses vorgesehenen, parallel zur Zylinderachse ausgerichteten und radial zur Zylinderachse versetzbaren Sperrstift, welcher in einer radial äußeren Blockierstellung das Scheibengehäuse gegen eine Drehbewegung blockiert und in einer radial inneren Freigabestellung das Scheibengehäuse für eine Drehbewegung freigibt. Ferner umfasst ein derartiger Scheibenzylinder mehrere im Scheibengehäuse entlang der Zylinderachse angeordnete, zwischen einer Verriegelungsstellung und einer Entriegelungsstellung drehbar gelagerte Scheibenzuhaltungen, wobei jede Scheibenzuhaltung eine Schlüsselaufnahmeöffnung und am Außenumfang wenigstens eine Sperrausnehmung aufweist, in welcher der Sperrstift in der Freigabestellung zumindest teilweise aufgenommen werden kann. Der Sperrstift kann nur dann in die Freigabestellung versetzt werden, wenn sich alle Scheibenzuhaltungen in ihrer Entriegelungsstellung befinden, in welcher die Sperrausnehmung der jeweiligen Scheibenzuhaltung radial zu dem Sperrstift ausgerichtet ist.

Ein derartiger Scheibenzylinder ist aus der DE 10 2011 015 314 A1 und aus der EP 0 712 979 B1 bekannt.

Ferner ist in EP 1 767 730 A1 ein Scheibenzylinderschloss mit einem dafür vorgesehenen Schlüssel beschrieben. Das Scheibenzylinderschloss weist Trennscheiben auf, die bei einer Drehung des Schlüssels in an dem Schlüssel angebrachte Vertiefungen eingreifen, sofern der Schlüssel vollständig eingeführt ist. Ist der Schlüssel hingegen nicht vollständig eingeführt, blockieren die Trennscheiben eine Drehung des Schlüssels, so dass der Schlüssel erst nach einem vollständigen und korrekten Einführen des Schlüssels gedreht werden kann.

In US 5 570 601 A ist ein Schlüssel für einen Zylinder mit Stiftzuhaltungen beschrieben, an dessen Schaft Vertiefungen ausgebildet sind. Mittels dieser Vertiefungen können Stifte der Stiftzuhaltungen bei einem Einführen des Schlüssels in den Zylinder in eine vorbestimmte Drehstellung überführt werden, so dass die Vertiefungen eine Möglichkeit zur zusätzlichen Kodierung bieten.

US 2013 / 000 367 A1 beschreibt einen Schlüssel für einen Scheibenzylinder, bei welchem zwischen aufeinanderfolgenden Antriebsschrägen Vertiefungen ausgebildet sind, um die Antriebsschrägen voneinander zu beabstanden und dadurch eine Betätigung einer benachbarten Zuhaltungsscheibe durch eine dazu nicht vorgesehene Antriebsschräge zu verhindern.

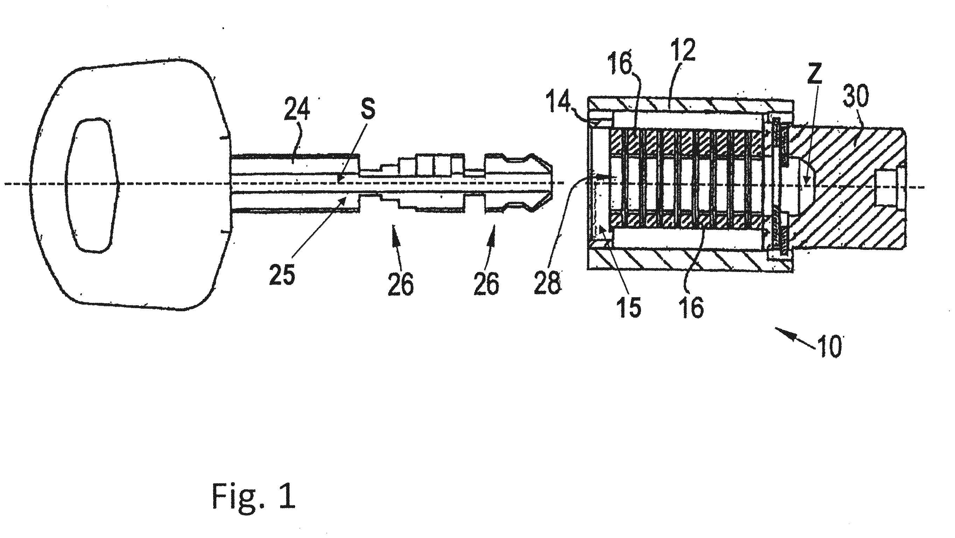

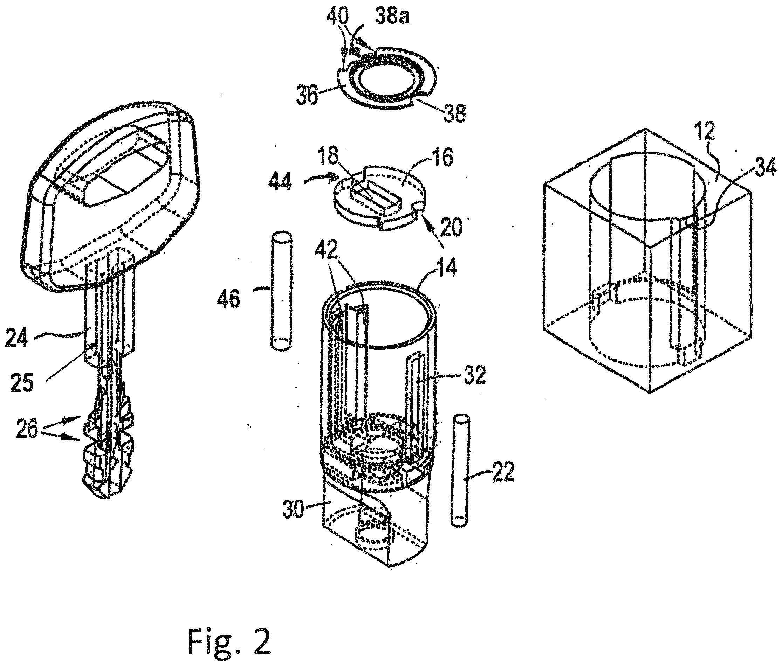

Gemäß Fig. 1 und 2 kann ein Scheibenzylinder 10 ein Zylindergehäuse 12 und einen im Zylindergehäuse 12 um eine Zylinderachse Z drehbar gelagerten Zylinderkern bzw. Scheibengehäuse 14 aufweisen. Die Drehbewegung des Scheibengehäuses 14 kann über einen mit dem Scheibengehäuse 14 verbundenen Kopplungsabschnitt 30 auf einen Verriegelungsmechanismus eines nicht dargestellten Schlosses übertragen werden, um das Schloss mittels des Scheibenzylinders 10 zu entriegeln oder zu verriegeln.

In dem Scheibengehäuse 14 sind hinter einer Sicherungsscheibe 15 entlang der Zylinderachse Z hintereinander mehrere drehbare Scheibenzuhaltungen 16 aufgenommen, die auch als Einstellscheiben oder Zuhaltungsscheiben bezeichnet werden. Die Scheibenzuhaltungen 16 besitzen jeweilige zentrale Aufnahmeöffnungen 18, welche gemeinsam einen Schlüsselkanal 28 zum Einführen eines Schlüssels 24 bilden und welche bei dem gezeigten Beispiel einen rechteckigen Querschnitt aufweisen. Die Scheibenzuhaltungen 16 besitzen ferner jeweilige Umfangsausnehmungen in Form von Sperrausnehmungen 20 zum Aufnehmen eines Sperrstifts 22, welcher parallel zu der Zylinderachse Z ausgerichtet ist.

Der Sperrstift 22 ist radial beweglich in einem in der Wandung des Scheibengehäuses 14 vorgesehenen Schlitz 32 aufgenommen. Wenn sich der Scheibenzylinder 10 in seiner Schließstellung befindet und damit die Scheibenzuhaltungen 16 in ihre Verriegelungsstellung gedreht sind, nimmt der Sperrstift 22 eine radial äußere Blockierstellung ein. In dieser Blockierstellung greift ein Teilabschnitt des Sperrstifts 22 in eine an der Innenwandung des Zylindergehäuses 12 vorgesehene Sperrstiftaufnahmevertiefung 34 ein, so dass das Scheibengehäuse 14 (abgesehen von einem geringfügigen Verdrehspiel) gegen eine Drehbewegung relativ zu dem Zylindergehäuse 12 blockiert ist.

Mittels des Schlüssels 24 können die Scheibenzuhaltungen 16 von ihrer Verriegelungsstellung in eine Entriegelungsstellung überführt werden. Wenn sich alle Scheibenzuhaltungen 16 in einer sogenannten Sortierendstellung befinden, die zwischen der Verriegelungsstellung und der Entriegelungsstellung liegt, dann sind die Sperrausnehmungen 20 aller Scheibenzuhaltungen 16 in Richtung der Zylinderachse Z gesehen fluchtend zueinander und radial zu dem Sperrstift 22 ausgerichtet. Hierdurch kann der Sperrstift 22 radial nach innen in seine Freigabestellung versetzt werden, in welcher er sich außerhalb der Sperrstiftaufnahmevertiefung 34 des Zylindergehäuses 12 befindet. Dadurch wird das Scheibengehäuse 14 für eine Drehbewegung relativ zu dem Zylindergehäuse 12 freigegeben, und das Scheibengehäuse 14 kann zusammen mit den Scheibenzuhaltungen 16 in Entriegelungsrichtung bis zum Erreichen der Entriegelungsstellung weitergedreht werden.

Am Außenumfang jeder Scheibenzuhaltung 16 kann ferner eine Fixierausnehmung 44 zum Aufnehmen eines Kernstifts 46 vorgesehen sein. Der Kernstift 46 ist parallel zu der Zylinderachse Z ausgerichtet und radial beweglich in einem in der Wandung des Scheibengehäuses 14 vorgesehenen Schlitz aufgenommen. In der Schließstellung des Scheibenzylinders 10 greift der Kernstift 46 in die Fixierausnehmungen 44 der Scheibenzuhaltungen 16 ein und verhindert somit ein Verdrehen der Scheibenzuhaltungen 16 zueinander, wenn kein Schlüssel 24 eingeführt ist.

Der dem Scheibenzylinder 10 zugeordnete Schlüssel 24 besitzt - ausgehend von einem entsprechenden Schlüsselrohling - an dem Schlüsselschaft 25 entlang einer Schlüsselachse S mehrere unterschiedlich abgewinkelte Antriebsschrägen 26, die verschiedenen Winkelpositionen der Sperrausnehmungen 20 der Scheibenzuhaltungen 16 entsprechen. Nach dem Einführen in den Schlüsselkanal 28 nimmt der Schlüssel 24 zunächst eine sogenannte Anfangsstellung ein, von der aus der Schlüssel 24 in Entriegelungsrichtung verdreht werden kann. Durch Verdrehen des Schlüssels 24 in Entriegelungsrichtung aus der Anfangsstellung heraus gelangt der Schlüssel 24 zunächst in eine sogenannte Nulllage, in welcher der Kernstift 46 außer Eingriff mit den Fixierausnehmungen 44 der Scheibenzuhaltungen 16 geraten kann und die Scheibenzuhaltungen 16 somit für eine Drehbewegung relativ zu dem Scheibengehäuse 14 freigegeben sind, um die Sperrausnehmungen 20 der Scheibenzuhaltungen 16 nacheinander in Flucht bringen zu können (sogenanntes Sortieren).

Die Scheibenzuhaltungen 16 weisen gegenüber der jeweils zugeordneten Antriebsschräge 26 des Schlüssels 24 ein bestimmtes Verdrehspiel auf, dessen Maß von dem Winkelmaß der jeweiligen Antriebsschräge 26 abhängt, d.h. in Abhängigkeit von dem Winkelmaß der Antriebsschrägen 26 gelangen Außenkanten oder Seitenkanten des Schafts 25 des Schlüssels 24 und korrespondierende Steuerabschnitte der zentralen Aufnahmeöffnungen 18 der zugeordneten jeweiligen Scheibenzuhaltungen 16 beim Sortieren zu unterschiedlichen Zeitpunkten bzw. in unterschiedlichen Winkelstellungen miteinander in Eingriff.

Beispielsweise beträgt ausgehend von der Nulllage der Scheibenzuhaltungen 16 der gesamte Rotationsweg des Schlüssels 24 bis zum Erreichen der Sortierendstellung aller Scheibenzuhaltungen 16 ca. 110°, d.h. nach einer Drehung des Schlüssels 24 um ca. 110° sind alle Scheibenzuhaltungen 16 sortiert und die Sperrausnehmungen 20 sind in radialer Flucht zu dem Sperrstift 22 ausgerichtet. Typischerweise ist für die möglichen Winkelpositionen der Sperrausnehmungen 20 ein Raster von sechs verschiedenen Winkelpositionen in gleichmäßiger Teilung vorgesehen, wobei der Winkelabstand zwischen zwei im Raster benachbarten Sperrausnehmungen 20 ca. 18° beträgt. Entsprechend gibt es für jede Scheibenzuhaltung 16 sechs mögliche Kodierungen, wobei zum Einstellen einer dieser Kodierungen die jeweilige Scheibenzuhaltung 16 um einen bestimmten Winkel aus ihrer Nulllage verdreht werden muss. Bei dem beispielhaften Scheibenzylinder 10 entspricht eine Kodierung "1" einer Drehung der Scheibenzuhaltung 16 um ca. 20°, eine benachbarte Kodierung "2" einer Drehung von ca. 38°, usw. und schließlich eine Kodierung "6" einer Drehung von ca. 110°, jeweils ab der Nulllage bis zum Erreichen der Sortierendstellung gemessen. Die Sperrausnehmungen 20 sind demgemäß in einem der jeweiligen Kodierung entsprechenden Winkelabstand von der Sperrstiftaufnahmevertiefung 34 des Zylindergehäuses 12 angeordnet, wenn die Scheibenzuhaltungen 16 sich in der Nulllage befinden.

Bei der Kodierung "6" kann eine Zwangskopplung zwischen der entsprechenden Scheibenzuhaltung 16 und dem zugeordneten Abschnitt des Schlüssels 24 vorgesehen sein, d.h. es ist keine Antriebsschräge bzw. eine Antriebsschräge mit dem Winkelmaß 0° vorhanden, so dass kein Verdrehspiel zwischen dem Schlüssel 24 und der Scheibenzuhaltung 16 besteht.

Bei der Kodierung "1" besteht hingegen das größtmögliche Verdrehspiel zwischen Schlüssel 24 und Scheibenzuhaltung 16, d.h. an dem Schlüssel 24 ist eine Antriebsschräge 26 mit einem Winkelmaß von ca. 90° vorgesehen. Eine Scheibenzuhaltung 16 der Kodierung "1" wird somit grundsätzlich erst am Ende der Drehbetätigung des Schlüssels 24, d.h. nach einer Drehung um ca. 90°, mitgenommen und durch eine Drehung des Schlüssels 24 um weitere ca. 20° in ihre Sortierendstellung gebracht.

Ein Scheibenzylinder kann auch eine oder mehrere so genannte Aushebescheiben aufweisen, bei denen es sich in der Regel um Scheibenzuhaltungen handelt. Jede Aushebescheibe weist die Kodierung "6" auf und ist in einer vorbestimmten axialen Position im Scheibengehäuse angeordnet, z.B. bezüglich der Schlüsseleinführrichtung ganz vorne, ganz hinten oder in der Mitte des Scheibenzylinders 10. Die als Aushebescheibe fungierende Scheibenzuhaltung ist mit dem Schlüssel 24 zwangsgekoppelt. Bei einer Schlüsselbetätigung in Entriegelungsrichtung dient die Aushebescheibe nach Abschluss der Sortierung (Drehung um 110°) zur Kopplung des Schlüssels 24 mit dem Scheibengehäuse 14 und bewirkt somit eine rotatorische Mitnahme des Scheibengehäuses 14. Ausgehend von der Freigabestellung des Sperrstifts 22 stellt die Aushebescheibe bei einer Schlüsselbetätigung in Verriegelungsrichtung sicher, dass der Sperrstift 22 ordnungsgemäß aus den Sperrausnehmungen 20 der Scheibenzuhaltungen 16 angehoben (d.h. in die Sperrstiftaufnahmevertiefung 34 gedrängt) wird und nicht etwa verkantet.

Ferner ist es üblich, zwischen den Scheibenzuhaltungen 16 Zwischenscheiben 36 anzuordnen, die mit dem Scheibengehäuse 14 drehfest oder mit Verdrehspiel gekoppelt sind. Die Zwischenscheiben 36 entkoppeln benachbarte Scheibenzuhaltungen 16 voneinander, damit die Drehbewegung einer jeweiligen Scheibenzuhaltung 16 nicht reibungsbedingt ein Mitdrehen der hierzu benachbarten Scheibenzuhaltung 16 bewirkt. Ein derartiges Mitnehmen könnte nämlich dazu führen, dass unter Umständen eine Scheibenzuhaltung 16 über ihre Entriegelungsstellung hinaus verdreht wird und sich damit der Scheibenzylinder 10 nicht mehr öffnen lässt.

Die drehfeste Kopplung der Zwischenscheiben 36 mit dem Scheibengehäuse 14 kann durch sich zumindest teilweise in radialer Richtung erstreckende Anschlagabschnitte 40 der Zwischenscheiben 36 erfolgen (Fig. 2), welche an entsprechenden, an der Innenwandung des Scheibengehäuses 14 ausgebildeten Vorsprüngen 42 anliegen. Jede Zwischenscheibe 36 weist eine Umfangsausnehmung 38 auf, die mit dem Sperrstift 22 radial fluchtet. Entsprechend weist jede Zwischenscheibe 36 eine weitere Umfangsausnehmung 38a auf, die mit dem Kernstift 46 radial fluchtet und die bevorzugt der Umfangsausnehmung 38 diametral gegenüberliegt.

Scheibenzylinder der vorstehend beschriebenen Art haben sich als vorteilhaft manipulationssicher erwiesen. Dementsprechend besteht ein Bedarf an Schlüsseln für derartige Scheibenzylinder, die ein komfortables Betätigen der Scheibenzylinder ermöglichen.

Es ist daher eine Aufgabe der Erfindung, einen Schlüssel für einen Scheibenzylinder sowie Möglichkeiten zur Herstellung solcher Schlüssel zu schaffen, um eine komfortable Handhabung der Schlüssel beim Betätigen eines Scheibenzylinders erreichen zu können.

Diese Aufgabe wird gelöst durch einen Schlüsselrohling mit den Merkmalen des Anspruchs 1, welcher zur Herstellung eines Schlüssels für einen Scheibenzylinder mit Scheibenzuhaltungen vorgesehen sein kann. Der Schlüsselrohling weist dabei einen Schlüsselschaft auf, der sich entlang einer Längsachse erstreckt und mehrere sich quer zu der Längsachse erstreckende Einkerbungen aufweist, die in gleichem Abstand zueinander verlaufen und dieselbe Tiefe besitzen. Ferner sind die Einkerbungen erfindungsgemäß in einer Schnittebene, die parallel zu der Längsachse des Schlüsselschafts verläuft, V-förmig.

Dabei können die Einkerbungen in einer Schnittebene, die parallel zu der Längsachse des Schlüsselschafts verläuft, zwei Flanken aufweisen, die zu der Längsachse des Schlüsselschafts in einem spitzen Winkel stehen, wobei der Winkel insbesondere in einem Bereich von 30° bis 60° liegen kann und vorzugsweise 45° beträgt. Die Flanken treffen in einem unteren Abschnitt der Einkerbungen aufeinander und bilden eine V-Form der Einkerbungen in einer zu der Längsachse parallelen Schnittebene.

Eine solche Ausbildung der Einkerbungen mit geneigten Flanken und insbesondere eine V-förmige Ausbildung der Einkerbungen kann auf einfache Weise durch Einstechen mittels eines spitzen Werkzeugs erzeugt werden. Die zu der Längsachse geneigten Flanken können insbesondere dazu dienen, Abschrägungen von Kanten zu bilden, die durch das Anbringen von Antriebsschrägen an dem Schlüsselrohling entstehen, um durch solche Fasen scharfe Kanten an einem Rücken des Schlüsselschafts zu vermeiden. Ferner können sich die Flanken entlang einer Querrichtung, insbesondere senkrecht zu der Längsachse, erstrecken, wobei die Querrichtung geradlinig oder gekrümmt sein kann.

Der Schlüsselrohling weist somit entlang des Schlüsselschafts mehrere Einkerbungen auf, die auch als Kerben oder Einschnitte bezeichnet werden könnten und sich quer zu der Längsachse erstrecken. Diese Einkerbungen können insbesondere benachbart zueinander angeordnet und/oder parallel zueinander ausgerichtet sein. Insbesondere können die Einkerbungen in einer jeweiligen Normalebene der Längsachse verlaufen, so dass sich die Einkerbungen senkrecht zu der Längsachse erstrecken können.

Mittels dieser Einkerbungen kann der Schlüsselschaft des Schlüsselrohlings insbesondere vorbereitet werden, um durch darauffolgendes Anbringen von Antriebsschrägen zum Kodieren des Schlüssels sowie gegebenenfalls durch weitere Herstellungsschritte, beispielsweise Anbringen eines Griffabschnitts, einen Schlüssel zum Betätigen eines Scheibenzylinders aus dem Schlüsselrohling zu fertigen. Die Einkerbungen können beispielsweise durch Einstiche oder Einschnitte in den Schlüsselschaft erzeugt sein, insbesondere mittels eines sich quer über einen Rücken des Schlüsselschafts erstreckenden spitzen Werkzeugs. Dadurch können die Einkerbungen insbesondere mit relativ zu der Längsachse geneigten Flanken bzw. spitz zulaufend ausgebildet sein. Die Antriebsschrägen können daraufhin beispielsweise durch Fräsen oder Schneiden an dem Schlüsselrohling angebracht werden, wobei mehrere Antriebsschrägen entsprechend dem gegenseitigen Abstand der Einkerbungen entlang der Längsachse des Schlüsselschafts aufeinanderfolgend ausgebildet werden können.

Um auf Grundlage des Schlüsselrohlings einen kodierten Schlüssel herzustellen, können also die Antriebsschrägen wahlweise an dem Schlüsselschaft eingearbeitet werden, wobei nicht an allen möglichen Positionen entlang des Schlüsselschafts zwingend eine Antriebsschräge erforderlich ist und wobei die Antriebsschrägen entsprechend der gewünschten jeweiligen Kodierung unterschiedliche Ausrichtungen und Tiefen besitzen können. Die regelmäßige Anordnung von Einkerbungen entlang des Schlüsselschafts kann als Raster für die Antriebsschrägen dienen. Zumindest einige der Antriebsschrägen, insbesondere solche, die sich bis zu einem Rücken des Schlüsselschafts erstrecken, können dabei Einschnitte in die Einkerbungen bilden, so dass die Einkerbungen bzw. deren Flanken Abschrägungen für Kanten, die an dem Rücken des Schlüsselschafts beim Fräsen der Antriebsschrägen entstehen, bzw. Fasen bilden können.

Durch das Vorbereiten des Schlüsselrohlings mit in den Schlüsselschaft eingebrachten Einkerbungen können folglich anstelle der bei gängigen Schlüsselrohlingen nach dem Ausbilden der Antriebsschrägen zurückbleibenden rechtwinkligen und meist scharfen Kanten an den Außenseiten des Schlüsselschafts bzw. einem Rücken des Schlüsselschafts geneigte bzw. in Längsrichtung abgeschrägte Kanten oder Fasen ausgebildet werden. Dadurch kann zum einen ein leichtgängiges und verbessertes Einführen des Schlüssels in einen Schlüsselkanal eines Scheibenzylinders erreicht werden, während zum anderen auch für einen Benutzer möglicherweise unangenehme oder schmerzhafte Kontakte mit scharfen Kanten an den Außenseiten des Schlüsselschafts während der Handhabung des aus dem Schlüsselrohling hergestellten Schlüssels verhindert werden können. Auch etwaige Beschädigungen eines Kleidungsstücks aufgrund solcher scharfen Kanten an den Außenseiten des Schlüssels, beispielsweise einer Hosentasche, in welcher der Schlüssel aufbewahrt oder transportiert wird, können so vermieden werden.

Die Einkerbungen können insbesondere auf gleiche Weise gefertigt bzw. angebracht sein und daher abgesehen von etwaigen Fertigungstoleranzen dieselbe Tiefe besitzen. Grundsätzlich kann ein solcher Schlüsselrohling zusätzlich zu den mehreren Einkerbungen auch weitere Vertiefungen aufweisen, die sich gegebenenfalls gleichsam quer zu der Längsachse erstrecken können.

Weitere Ausführungsformen sind den abhängigen Ansprüchen, der Beschreibung sowie den Zeichnungen zu entnehmen.

Die Einkerbungen können ferner in Umfangsrichtung des Schlüsselschafts verlaufen, wobei die Einkerbungen entlang der Längsachse des Schlüsselschafts insbesondere in demselben Umfangsbereich des Schlüsselschafts vorgesehen sein können.

Darüber hinaus können die Einkerbungen dieselbe Länge bezüglich ihrer Erstreckungsrichtung quer zu der Längsachse aufweisen und/oder die Einkerbungen können sich quer über einen Rücken des Schlüsselschafts erstrecken.

Bei einigen Ausführungsformen können sich die Einkerbungen quer zu der Längsachse des Schlüsselschafts geradlinig oder bezüglich der Längsachse gekrümmt erstrecken. Alternativ oder zusätzlich kann es bei einigen Ausführungsformen vorgesehen sein, dass jede der Einkerbungen in einer Normalebene zu der Längsachse verläuft. Insbesondere können sich die Einkerbungen parallel zueinander erstrecken.

Der Schlüsselschaft kann beispielsweise im Querschnitt rechteckig sein und/oder zwei einander entgegengesetzte und parallel zueinander ausgerichtete Seiten aufweisen, so dass sich die Einkerbungen quer zu der Längsachse geradlinig über eine dieser Seiten bzw. einen durch diese Seite gebildeten Rücken des Schlüsselschafts erstrecken können.

Ferner kann der Schlüsselschaft beispielsweise zumindest abschnittsweise im Querschnitt gekrümmt und insbesondere abschnittsweise kreisbogenförmig ausgebildet sein, wobei die Einkerbungen an einer solchen gekrümmten Seite bzw. einem gekrümmten Rücken des Schlüsselschafts angebracht sein können. Die Einkerbungen können auch dabei geradlinig ausgebildet sein, so dass die Tiefe einer jeweiligen Einkerbung entlang ihrer Erstreckungsrichtung quer zu der Längsachse des Schlüsselschafts gegenüber dem Rücken des Schlüsselschafts variieren kann. Beispielsweise können die Einkerbungen eine maximale Tiefe in einem mittleren Abschnitt bezüglich der Erstreckungsrichtung aufweisen, wobei die mehreren Einkerbungen dieselbe maximale Tiefe aufweisen können. Alternativ dazu können sich auch die Einkerbungen gekrümmt erstrecken, insbesondere einer etwaigen Krümmung eines Rückens des Schlüsselschafts entsprechend, so dass die Einkerbungen auch bei einem quer zu der Längsrichtung gekrümmt ausgebildeten Rücken des Schlüsselschafts entlang ihrer Erstreckungsrichtung eine konstante Tiefe gegenüber dem Rücken aufweisen können.

Bei einigen Ausführungsformen kann die Tiefe der Einkerbungen entlang einer senkrecht zu der Längsachse stehenden Hochachse des Schlüsselschafts höchstens 15% der Höhe des Schlüsselschafts betragen. Die Einkerbungen können somit lediglich geringfügige Vertiefungen an dem Schlüsselschaft bilden, um bei einem Erzeugen von Antriebsschrägen entstehende Kanten entlang einer Querrichtung abschrägen zu können, ohne dadurch das Anbringen der Antriebsschrägen zu beeinträchtigen. Ferner können die Einkerbungen durch die geringe Tiefe, insbesondere bei einer V-förmigen Ausbildung und/oder in einem spitzen Winkel zu der Längsachse ausgerichteten Flanken, entlang der Längsachse schmal ausgebildet sein, so dass der Schlüsselschaft bzw. ein Rücken des Schlüsselschafts durch das Anbringen der Einkerbungen lediglich geringfügige Veränderungen erfährt.

Bei einigen Ausführungsformen kann der Schlüsselschaft wenigstens fünf, insbesondere wenigstens sechs, wenigstens sieben oder wenigstens acht, Einkerbungen aufweisen. Ferner kann der Schlüsselschaft bei einigen Ausführungsformen genau fünf, genau sechs, genau sieben oder genau acht Einkerbungen aufweisen. Dies kann insbesondere das Anbringen einer gängigen Anzahl von Antriebsschrägen mit gängiger Breite an dem Schlüsselrohling ermöglichen, wobei es insbesondere vorgesehen sein kann, die Antriebsschrägen zwischen zwei bezüglich der Längsachse äußeren Einkerbungen der mehreren Einkerbungen anzubringen.

Bei einigen Ausführungsformen kann der Schlüsselschaft zwei einander entgegengesetzte, sich entlang der Längsachse erstreckende Breitseiten und zwei einander entgegengesetzte, sich entlang der Längsachse erstreckende Schmalseiten aufweisen, wobei die Einkerbungen an zumindest einer der Schmalseiten gebildet sein können. Insbesondere können die Einkerbungen an beiden Schmalseiten des Schlüsselschafts ausgebildet sein.

Die Schmalseiten können einander bezüglich einer senkrecht zu der Längsachse verlaufenden Hochachse entgegengesetzt angeordnet sein und die Breitseiten können bezüglich einer Querrichtung, die senkrecht zu der Längsachse und senkrecht zu der Hochachse verläuft, einander entgegengesetzt angeordnet sein. Die Schmalseiten können mit einer durch die Erstreckung in Querrichtung definierten Breite ausgebildet sein, welche insbesondere geringer als eine durch die Erstreckung entlang der Hochachse definierte Höhe der Breitseiten sein kann. Insbesondere können die beiden Schmalseiten an jeweiligen Endabschnitten in die Breitseiten übergehen. Der Schlüsselrohling kann somit schmal ausgebildet sein, um den daraus hergestellten Schlüssel in einen schmalen Schlüsselkanal eines Scheibenzylinders einführen zu können.

Die Schmalseiten können bei einigen Ausführungsformen in einer Schnittebene, die senkrecht zu der Längsachse des Schlüsselschafts verläuft, gekrümmt und insbesondere kreisbogenförmig geformt sein. Alternativ können die Schmalseiten geradlinig geformt sein. Die Breitseiten können sich im Wesentlichen in einer durch die Hochachse und die Längsachse definierten Ebene erstrecken und beispielsweise lediglich in einem mittleren Abschnitt eine sich entlang der Längsachse erstreckende Ausnehmung aufweisen, die zur Führung eines aus dem Schlüsselrohling herzustellenden Schlüssels in einem Schlüsselkanal dienen kann. Ferner können grundsätzlich auch andersartige Ausbildungen und/oder Ausrichtungen der Breitseiten vorgesehen sein. Beispielsweise kann der Schlüsselrohling im Querschnitt tailliert oder Z-förmig sein, so dass die Breitseiten konkav ausgebildet oder zu der Hochachse geneigt ausgerichtet sein können.

Bei einigen Ausführungsformen kann die zumindest eine Schmalseite an einem ersten Endabschnitt in die eine Breitseite und an einem zweiten Endabschnitt in die andere Breitseite übergehen, wobei sich die Einkerbungen quer über die Schmalseite von dem ersten Endabschnitt zu dem zweiten Endabschnitt erstrecken können. Die Einkerbungen können somit die Schmalseite in Querrichtung vollständig überspannen. Insbesondere können die an der einen Schmalseite ausgebildeten Einkerbungen in Richtung der anderen, entgegengesetzt angeordneten Schmalseite spitz zulaufend ausgebildet sein. Auch dies kann es ermöglichen, die Flanken der Einkerbungen als abgeschrägte Kanten bzw. Fasen an einer Außenseite, insbesondere einer Schmalseite, des Schlüsselschafts zu nutzen, um ein leichtgängiges Einführen des aus dem Schlüsselrohling gebildeten Schlüssels in einen Schlüsselkanal sowie eine komfortable Handhabung des Schlüssels zu ermöglichen.

Gerade ein mit zwei Schmalseiten und zwei Breitseiten ausgebildeter Schlüsselrohling kann zum Herstellen eines Schlüssels für einen Scheibenzylinder geeignet sein, indem beispielsweise eine Orientierung, in welcher der Schlüssel in einen Schlüsselkanal eingeführt werden kann, durch ein solches Profil für einen Benutzer unmittelbar ersichtlich sein kann. Insofern bedürfen gerade derartige Schlüssel einer Möglichkeit zur komfortablen Handhabung und die Erfindung bezieht sich daher auch unabhängig auf einen Schlüsselrohling zum Herstellen eines Schlüssels für einen Scheibenzylinder mit Scheibenzuhaltungen, der zwei einander entgegengesetzte, sich entlang einer Längsachse erstreckende Breitseiten und zwei einander entgegengesetzte, sich entlang der Längsachse erstreckende Schmalseiten aufweist, wobei an zumindest einer der Schmalseiten mehrere sich quer zu der Längsachse erstreckende Einkerbungen ausgebildet sind. Die Einkerbungen können dabei insbesondere die hierin, vor- und nachstehend, erläuterten Merkmale und Eigenschaften aufweisen.

Die Einkerbungen können bei einigen Ausführungsformen Kanten von anzubringenden und/oder angebrachten Antriebsschrägen zum Antreiben der Scheibenzuhaltungen bilden. Insbesondere kann dabei eine Flanke einer jeweiligen Einkerbung eine solche geneigte Kante einer Antriebsschräge bilden, während die andere Flanke während bzw. infolge des Ausbildens der Antriebsschräge entfernt werden kann. Dazu kann eine Antriebsschräge beispielsweise als Einschnitt in eine Einkerbung ausgebildet werden, wobei eine bezüglich der Längsachse axiale (vordere oder hintere) Begrenzung der Antriebsschräge insbesondere mittig durch die Einkerbung und/oder durch einen tiefsten Punkt der Einkerbung verlaufen kann. Insbesondere kann eine Antriebsschräge als Einschnitt in eine jeweilige Hälfte von zwei zueinander benachbarten Einkerbungen ausgebildet werden.

Bei einigen Ausführungsformen kann jeder der mehreren an der einen Schmalseite ausgebildeten Einkerbungen eine jeweilige an der anderen Schmalseite entsprechend ausgebildete Einkerbung zugeordnet sein, wobei die jeweiligen einander zugeordneten Einkerbungen entlang der Längsachse des Schlüsselschafts insbesondere auf gleicher Höhe und/oder bezüglich der Längsachse einander diametral gegenüber liegend angeordnet sein können. Der Schlüsselschaft kann somit beidseitig bzw. an beiden Schmalseiten mit einander zugeordneten Einkerbungen versehen sein, so dass an beiden Seiten geneigte Kanten von daran ausgebildeten bzw. auszubildenden Antriebsschrägen erzeugt werden können. Insbesondere kann ein aus einem solchen Schlüsselrohling herzustellende Schlüssel durch die Anordnung der einander zugeordneten Einkerbungen auf einer Höhe bezüglich der Längsachse rotationssymmetrisch bezüglich Drehungen um 180° ausgebildet werden, so dass der Schlüssel in dahingehend beliebiger Orientierung in einen Schlüsselkanal zum Betätigen eines Scheibenzylinders eingeführt werden kann.

Die Erfindung betrifft ferner einen Schlüssel zum Betätigen eines Scheibenzylinders mit mehreren drehbaren Scheibenzuhaltungen. Der Schlüssel umfasst einen Schlüsselschaft, der sich entlang einer Längsachse erstreckt und eine senkrecht zu der Längsachse ausgerichtete Hochachse aufweist, wobei der Schlüsselschaft mehrere entlang der Längsachse nebeneinander angeordnete Antriebsschrägen zum Antreiben der Scheibenzuhaltungen aufweist, die parallel zu der Längsachse und in unterschiedlichen Winkeln schräg zu der Hochachse des Schlüsselschafts ausgerichtet sind. Die Antriebsschrägen bilden dabei Vertiefungen gegenüber einem Rücken des Schlüsselschafts. Der Rücken des Schlüsselschafts weist Abschrägungen auf, die an wenigstens einige der Antriebsschrägen angrenzen.

Der Schlüssel kann insbesondere aus einem, entsprechend bearbeiteten, Schlüsselrohling nach einer der vorstehend genannten Ausführungsformen gebildet sein.

Die Antriebsschrägen können durch jeweilige verschieden schräge Ausrichtungen eine Kodierung des Schlüssels bilden, um ein Sortieren der entsprechend kodierten Scheibenzuhaltungen eines mittels des Schlüssels zu betätigenden Scheibenzylinders zu ermöglichen. Insbesondere können die Antriebsschrägen zwischen den Einkerbungen eines Schlüsselrohlings der vorstehend beschriebenen Art ausgebildet, beispielsweise gefräst oder geschnitten, sein. Die Abschrägungen können insbesondere von nach der Bearbeitung zurückbleibenden Flanken der Einkerbungen gebildet sein und Fasen bilden, um Kanten der Abschrägungen an dem Rücken des Schlüsselschafts abzuschrägen. Dies kann ein leichtgängiges Einführen des Schlüssels in einen Schlüsselkanal des Scheibenzylinders sowie eine komfortable Handhabung ermöglichen.

Es ist allerdings nicht erforderlich, dass sämtliche Antriebsschrägen an eine Abschrägung oder zwei Abschrägungen des Schlüsselschafts angrenzen. In Abhängigkeit von der gewünschten jeweiligen Kodierung können die Antriebsschrägen unterschiedliche Ausrichtungen und Tiefen besitzen, und je nach Ausrichtung und Tiefe kann die jeweilige Antriebsschräge überhaupt bis zu dem Rücken des Schlüsselschafts reichen und dort an eine Abschrägung angrenzen.

Bei einigen Ausführungsformen können sich die Abschrägungen quer zu der Längsachse des Schlüsselschafts erstrecken und schräg zu der Längsachse ausgerichtet sein, insbesondere in einem Winkel, der in einem Bereich von 30° bis 60° liegt und vorzugsweise 45° beträgt. Insbesondere können die Abschrägungen dabei in Richtung einer Schlüsselspitze, mit welcher der Schlüssel in eine Schlüsseleinführöffnung eines Scheibenzylinders einführbar ist, sich entlang der Längsachse vertiefend bzw. bezüglich der Hochachse abfallend ausgebildet sein, um das Einführen und Ausrichten des Schlüssels in einem Schlüsselkanal zu erleichtern. Alternativ oder zusätzlich können die Abschrägungen in einer von der Schlüsselspitze weg weisenden Richtung sich entlang der Längsachse vertiefend bzw. bezüglich der Hochachse abfallend ausgebildet sein, um das Entnehmen des Schlüssels aus einem Schlüsselkanal zu erleichtern.

Bei einigen Ausführungsformen können die Abschrägungen eine Flanke bilden, welche in einer Schnittebene, die parallel zu der Längsachse des Schlüsselsschafts verläuft, zu der Längsachse des Schlüsselschafts in einem spitzen Winkel steht. Dieser Winkel kann insbesondere in einem Bereich von 30° bis 60° liegen und beispielsweise 45° betragen.

Ferner können die Abschrägungen geneigt zu einer Normalebene der Längsachse ausgerichtet sein.

Die Abschrägungen können sich bei einigen Ausführungsformen quer zu der Längsachse des Schlüsselschafts geradlinig oder bezüglich der Längsachse gekrümmt erstrecken. Ferner kann bei einigen Ausführungsformen jede der Abschrägungen im Wesentlichen in einer Normalebene zu der Längsachse des Schlüsselschafts verlaufen (und hierbei, wie erläutert, schräg zu der Längsachse ausgerichtet sein). Die Abschrägungen können insbesondere parallel zueinander und senkrecht zu der Längsachse des Schlüsselschafts ausgerichtet sein.

Bei einigen Ausführungsformen kann die Tiefe der Abschrägungen entlang der Hochachse des Schlüsselschafts höchstens 15% der Höhe des Schlüsselschafts betragen. Die Abschrägungen können dementsprechend quer zu der Längsachse, insbesondere über einen Rücken des Schlüsselschafts, verlaufende geneigte Kanten der Antriebsschrägen bilden, während die Antriebsschrägen tiefer reichende Vertiefungen des Schlüsselschafts bilden können.

Bei einigen Ausführungsformen kann der Schlüsselschaft zwei einander entgegengesetzte, sich entlang der Längsachse erstreckende Breitseiten und zwei einander entgegengesetzte, sich entlang der Längsachse erstreckende Schmalseiten aufweisen, wobei die Abschrägungen an zumindest einer der Schmalseiten gebildet sein können. Insbesondere können die Abschrägungen an beiden Schmalseiten des Schlüsselschafts gebildet sein. Der Schlüsselschaft kann somit im Querschnitt länglich, beispielsweise rechteckig oder im Wesentlichen rechteckig mit gekrümmten Schmalseiten und/oder gekrümmten Breitseiten, ausgebildet sein, um in einen schmalen Schlüsselkanal eingeführt werden zu können. Insbesondere können sich die Schmalseiten entlang der Längsachse erstrecken und in einer senkrecht zu der Längsachse ausgerichteten Schnittfläche gekrümmt, beispielsweise kreisbogenförmig, geformt sein. Auch der Rücken des Schlüsselschafts, an welchem die Abschrägungen ausgebildet sind, kann in einer senkrecht zu der Längsachse orientierten Schnittebene gekrümmt und/oder kreisbogenförmig verlaufen.

Ferner kann bei einigen Ausführungsformen jede der Antriebsschrägen einen planen Antriebsbereich aufweisen. Dabei kann ein in Umfangsrichtung des Schlüsselschafts liegender Übergangsbereich der Antriebsschrägen jedoch auch gekrümmt oder abgerundet ausgebildet sein, so dass die Antriebsschrägen in dem Übergangsbereich beispielsweise gleichmäßig in einen abgerundeten Rücken des Schlüsselschafts übergehen können. Der Antriebsbereich kann insbesondere zum Bewegen bzw. Antreiben der Scheibenzuhaltungen während eines Sortierens dienen.

Insbesondere können die Antriebsschrägen zwischen den Einkerbungen eines Schlüsselrohlings der vorstehend beschriebenen Art ausgebildet sein und die Abschrägungen können von Flanken solcher Einkerbungen gebildet sein. Dabei kann eine jeweilige Antriebsschräge zwischen zwei einander entlang der Längsachse benachbarten Einkerbungen des Schlüsselrohlings anbracht sein.

Die Erfindung betrifft ferner ein Zylinderschloss mit einem Scheibenzylinder und einem Schlüssel wie hierin offenbart, wobei der Scheibenzylinder entlang einer Zylinderachse mehrere um die Zylinderachse drehbare Scheibenzuhaltungen und einen parallel zu der Zylinderachse ausgerichteten und radial zu der Zylinderachse versetzbaren Sperrstift aufweist, wobei jede Scheibenzuhaltung eine zentrale Aufnahmeöffnung zur Aufnahme des Schlüssels und eine Umfangsausnehmung zur Aufnahme des Sperrstifts aufweist. Die Aufnahmeöffnungen der Scheibenzuhaltungen können dabei in Flucht zueinander angeordnet sein und einen Schlüsselkanal bilden, in welchen der Schlüssel zum Betätigen des Scheibenzylinders einführbar ist.

Bei einigen Ausführungsformen des Scheibenzylinders kann es vorgesehen sein, dass der Sperrstift in einer radial äußeren Blockierstellung den Zylinderkern gegen eine Drehbewegung blockiert und in einer radial inneren Freigabestellung den Zylinderkern für eine Drehbewegung freigibt. Die Scheibenzuhaltungen können dabei zwischen einer Verriegelungsstellung und einer Entriegelungsstellung drehbar sein, wobei der Sperrstift nur dann in die Freigabestellung versetzbar sein kann, wenn sich alle Scheibenzuhaltungen in ihrer Entriegelungsstellung befinden, in welcher die Umfangsausnehmung der jeweiligen Scheibenzuhaltung radial zu dem Sperrstift ausgerichtet ist. Der Schlüssel kann derart ausgebildet sein, dass die Scheibenzuhaltungen mittels der Antriebsschrägen sortierbar sind, um die Umfangsausnehmungen der Scheibenzuhaltungen entlang der Zylinderachse in Flucht zueinander und radial zu dem Sperrstift in ihren jeweiligen Entriegelungsstellungen anordnen zu können.

Ferner betrifft die Erfindung ein Verfahren zum Herstellen eines Schlüsselrohlings, der zum Herstellen eines Schlüssels für einen Scheibenzylinder mit drehbaren Scheibenzuhaltungen dient, mit den Schritten:
- Bereitstellen eines Schlüsselschafts, der sich entlang einer Längsachse erstreckt; und
- Anbringen von mehreren Einkerbungen an dem Schlüsselschaft, die sich quer zu der Längsachse erstrecken, in gleichem Abstand zueinander verlaufen und dieselbe Tiefe besitzen. Dabei kann der Schlüsselrohling insbesondere wie hierin offenbart ausgebildet werden.

Die Einkerbungen können insbesondere angebracht werden, um bei einem nachfolgenden Ausbilden von Antriebsschrägen zum Kodieren des Schlüssels abgeschrägte Kanten bzw. Abschrägungen erzeugen zu können, die ein leichtgängiges Einführen des aus dem Schlüsselrohling herzustellenden Schlüssels sowie eine komfortable Handhabung desselben ermöglichen. In einem folgenden Schritt der Herstellung des Schlüsselrohlings können dementsprechend Antriebsschrägen angebracht, insbesondere gefräst, werden.

Die Erfindung betrifft zudem ein Verfahren zum Herstellen eines Schlüssels zum Betätigen eines Scheibenzylinders mit mehreren drehbaren Scheibenzuhaltungen. Das Verfahren umfasst die folgenden Schritte:
- Bereitstellen eines Schlüsselschafts, der sich entlang einer Längsachse erstreckt und eine senkrecht zu der Längsachse ausgerichtete Hochachse aufweist;
- Anbringen von mehreren Einkerbungen an dem Schlüsselschaft, die sich quer zu der Längsachse erstrecken und dieselbe Tiefe besitzen, wobei die Einkerbungen insbesondere wie bei einem Schlüsselrohling der hierin offenbarten Art ausgebildet werden; und
- Anbringen von mehreren entlang der Längsachse nebeneinander angeordneten Antriebsschrägen, die parallel zu der Längsachse und in unterschiedlichen Winkeln schräg zu der Hochachse des Schlüsselschafts ausgerichtet sind, wobei die Position der Antriebsschrägen derart gewählt wird, dass zumindest einige der Antriebsschrägen Einschnitte in die Einkerbungen bilden und dass zumindest einige der Einkerbungen hierdurch an die Antriebsschrägen angrenzende Abschrägungen bilden. Dabei können die Antriebsschrägen und/oder die Abschrägungen insbesondere wie bei einem Schlüssel der hierin offenbarten Art ausgebildet werden.

Insbesondere können die Antriebsschrägen, welche Einschnitte in die Einkerbungen bilden, derart angebracht werden, dass eine bezüglich der Längsachse des Schlüsselschafts axiale Begrenzung der Antriebsschräge durch einen mittleren Abschnitt der jeweiligen Einkerbung verläuft und die verbleibende Flanke der Einkerbung die genannte Abschrägung bildet. Ferner kann an dem Schlüsselschaft ein Griffabschnitt ausgebildet werden oder der Schlüsselschaft kann mit einem Griffabschnitt versehen und/oder verbunden werden.

Die Erfindung wird im Folgenden rein beispielhaft anhand eines Ausführungsbeispiels unter Bezugnahme auf die Zeichnungen erläutert.

Es zeigen:
- Fig. 1: eine Längsschnittansicht eines Scheibenzylinders mit einem Schlüssel,
- Fig. 2: eine Explosionsansicht von Teilen des Scheibenzylinders mit Schlüssel gemäß Fig. 1,
- Fig. 3A bis 3D: eine Längsansicht eines Schlüsselrohlings der hierin offenbarten Art mit einem Schlüsselschaft, eine Detailansicht eines vorderen Abschnitts des Schlüsselrohlings, eine Detailansicht eines Abschnitts eines Rückens des Schlüsselschafts zur Veranschaulichung daran angebrachter Einkerbungen und eine Frontansicht des Schlüsselrohlings,
- Fig. 4A und 4B: eine Längsansicht des Schlüsselrohlings mit angebrachten Antriebsschrägen sowie eine Detailansicht des vorderen Abschnitts des Schlüsselrohlings und
- Fig. 5A bis 5D: eine Längsansicht eines aus dem Schlüsselrohling hergestellten Schlüssels zum Betätigen eines Scheibenzylinders, eine perspektivische Ansicht des Schlüssels, eine perspektivische Detailansicht eines vorderen Abschnitts des Schlüssels und eine weitere perspektivische Detailansicht zur Veranschaulichung von an die Antriebsschrägen angrenzenden Abschrägungen.

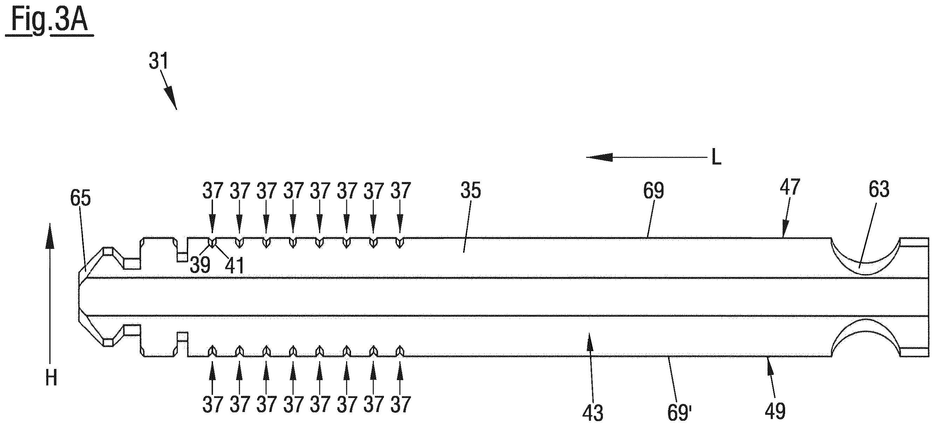

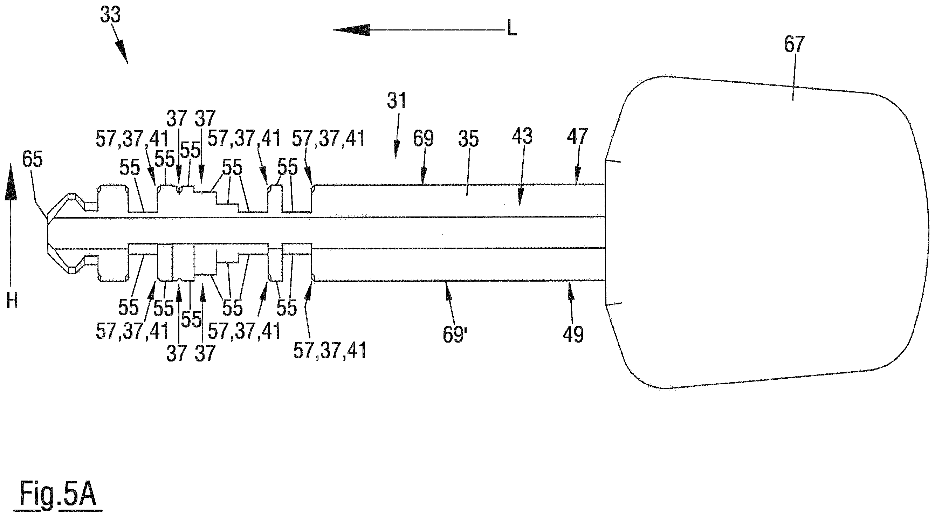

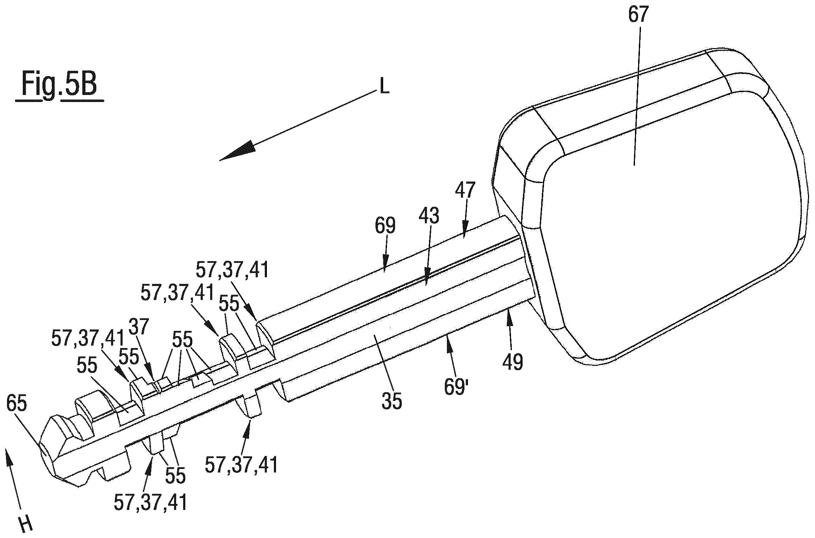

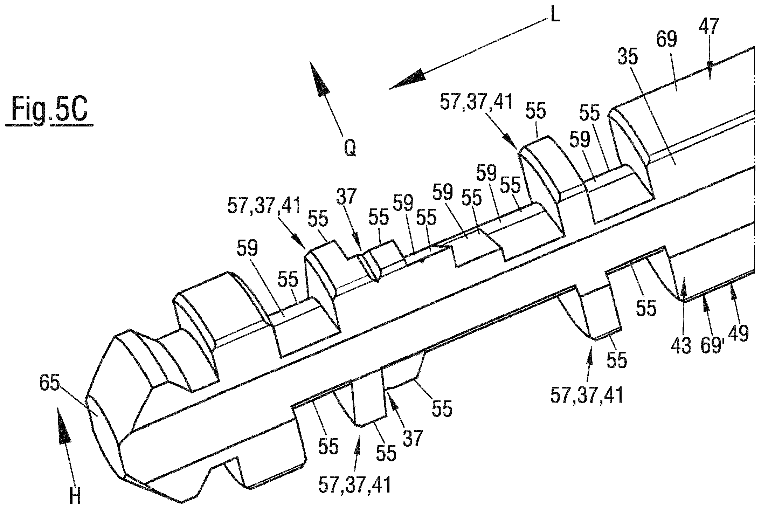

Fig. 3A zeigt einen Schlüsselrohling 31 zum Herstellen eines Schlüssels 33, welcher in den Fig. 5A und 5B dargestellt ist. Dieser Schlüssel 33 kann dazu vorgesehen sein, einen Scheibenzylinder 10 der in den Fig. 1 und 2 gezeigten und in der Einleitung erläuterten Art zu betätigen und dessen Scheibenzuhaltungen 16 zu sortieren, um den Sperrstift 22 in einer Freigabestellung in den Umfangsausnehmungen 20 der Scheibenzuhaltungen 16 anordnen und eine weitergehende Drehung des Schlüssels 33 auf das Scheibengehäuse 14 übertragen zu können. Das Scheibengehäuse 14 kann über den Kopplungsabschnitt 30 mit einem Verriegelungsmechanismus eines nicht gezeigten Schlosses gekoppelt sein, so dass das Schloss mittels des Schlüssels 33 wahlweise geöffnet oder versperrt werden kann.

Ein derartiger Schlüsselrohling 31 kann bereits hinsichtlich einiger Merkmale (z.B. Profil, Schlüsselspitze) bearbeitet sein; er besitzt jedoch noch nicht die endgültige Kodierung eines Schlüssels 33.

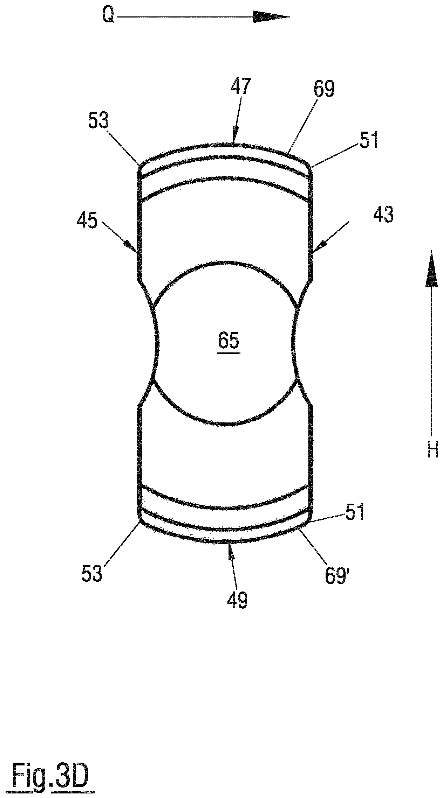

Der in Fig. 3A gezeigte Schlüsselrohling 31 weist einen Schlüsselschaft 35 auf, welcher sich von einem Verbindungsabschnitt 63, der zum Anbringen eines Griffabschnitts 67 für den Schlüssel 33 dient (vgl. Fig. 5A und 5B), entlang einer Längsachse L zu einer Schlüsselspitze 65 erstreckt, mit welcher der Schlüssel 33 in die Schlüsseleinführöffnung 19 des Schlüsselkanals 28 des Scheibenzylinders 10 einführbar ist (vgl. Fig. 1 und 2). Der Schlüsselschaft 35 weist dabei eine sich entlang der Längsachse L erstreckende erste Schmalseite 47 und eine sich ebenfalls entlang der Längsachse L erstreckende zweite Schmalseite 49 auf, welche der ersten Schmalseite 47 bezüglich einer senkrecht zu der Längsachse L ausgerichteten Hochachse H des Schlüsselschafts 35 entgegengesetzt ist. Die beiden Schmalseiten 47 und 49 gehen an einem jeweiligen ersten Endabschnitt 51 in eine erste Breitseite 43 über, welche sich entlang der Längsachse L erstreckt und die beiden Schmalseiten 47 und 49 entlang der Hochachse H verbindet. Der ersten Breitseite 43 ist bezüglich einer senkrecht zu der Längsachse L und der Hochachse H ausgerichteten Querrichtung Q eine zweite Breitseite 45 entgegengesetzt, wobei die erste Schmalseite 47 und die zweite Schmalseite 49 an jeweiligen zweiten Endabschnitten 53 in die zweite Breitseite 45 übergehen (vgl. Fig. 3D).

Wie Fig. 3D zeigt, sind die Schmalseiten 47 und 49 im Querschnitt bzw. von der Schlüsselspitze 65 entlang der Längsachse L aus betrachtet kreisbogenförmig ausgebildet. Die Breitseiten 43 und 45 erstrecken sich hingegen im Wesentlichen entlang der Hochachse H bzw. in zu der Hochachse H parallelen Ebenen, weisen jedoch in einem mittleren Bereich eine jeweilige Ausnehmung 75 auf, welche sich als Schlüsselführung 77 zum Ausrichten des Schlüssels 33 während des Einführens in den Schlüsseleinführkanal 28 entlang der Längsachse L erstreckt (vgl. Fig. 3A, 3B und 3D, Fig. 4A und 4B sowie Fig. 5A bis 5D).

Ferner sind an den beiden Schmalseiten 47 und 49 des Schlüsselschafts 35, die als Außenseiten des Schlüsselschafts 35 jeweilige einander entgegengesetzte Rücken 69 und 69' bilden, mehrere Einkerbungen 37 angebracht (vgl. Fig. 3A bis 3C). Insbesondere können diese Einkerbungen 37 in einem ersten Schritt zum Herstellen des Schüssels 33 an dem bereitgestellten Schlüsselrohling 31 ausgebildet und beispielsweise in die Rücken 69 und 69' mittels eines spitzen Werkzeugs eingestochen werden. Die Einkerbungen 37 verlaufen quer zu der Längsachse L und sind bezüglich der Längsachse L in gleichem Abstand zueinander angeordnet. In der gezeigten Ausführungsform erstrecken sich die Einkerbungen 37 in einer jeweiligen Normalebene der Längsachse L und parallel zueinander entlang der senkrecht zu der Längsachse ausgerichteten Querrichtung Q. Ferner weisen sämtliche der mehreren Einkerbungen 37 dieselbe Tiefe bezüglich der Hochachse H auf.

Aufgrund der kreisbogenförmigen Ausbildung der Rücken 69 und 69' bzw. der Schmalseiten 47 und 49 weisen die sich geradlinig erstreckenden Einkerbungen 37 entlang der Querrichtung Q eine variierende Tiefe gegenüber den jeweiligen Rücken 69 oder 69' auf, wobei die Tiefe in einem mittleren Abschnitt bezüglich der Querrichtung Q maximal ist. Sämtliche der mehreren Einkerbungen 37 weisen hierbei dieselbe maximale Tiefe auf. Alternativ dazu können auch die Einkerbungen 37 im Querschnitt gekrümmt und insbesondere kreisbogenförmig verlaufen, so dass die Tiefe der Einkerbungen 37 gegenüber dem jeweiligen Rücken 69 oder 69' entlang der Querrichtung Q trotz der Krümmung der Rücken 69 und 69' auch konstant sein kann.

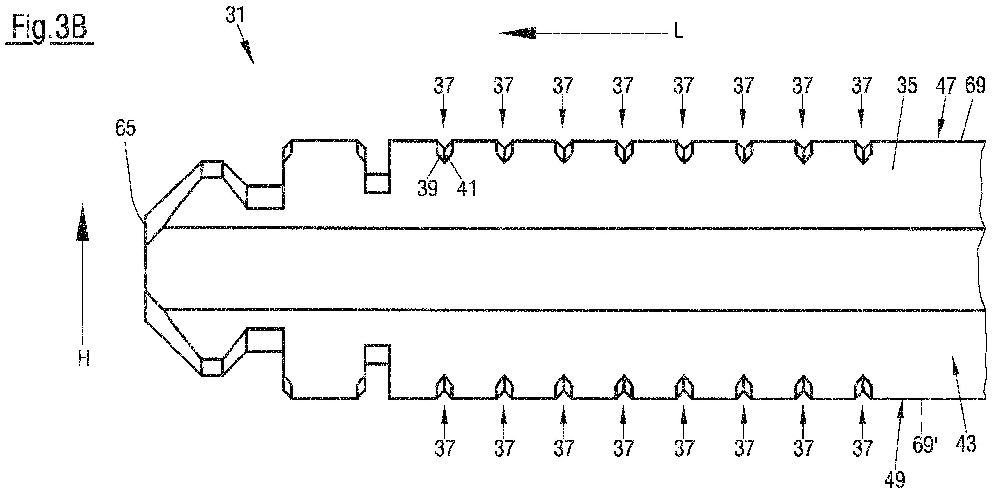

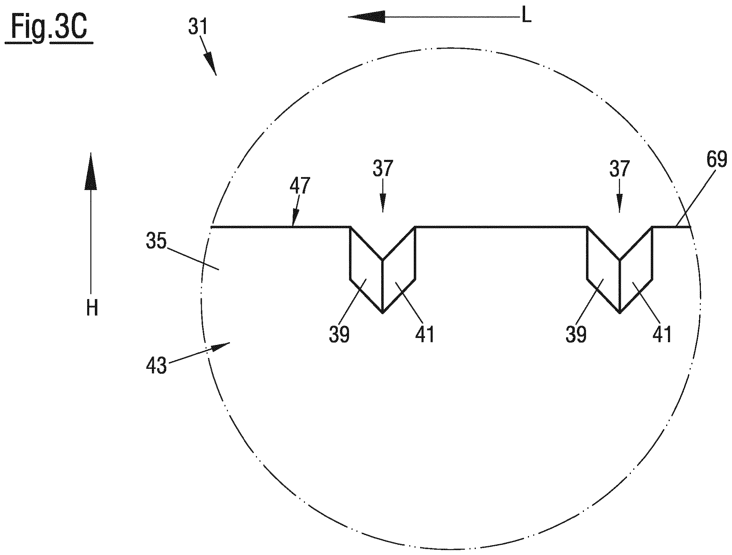

Wie insbesondere aus der Detailansicht der Fig. 3C hervorgeht, sind die Einkerbungen 37 in einer parallel zu der Längsachse L verlaufenden Schnittebene V-förmig ausgebildet und weisen eine jeweilige erste Flanke 39 sowie eine jeweilige zweite Flanke 41 auf, die zu der Längsachse L in einem spitzen Winkel stehen. Insbesondere beträgt dieser Winkel hier 45°, wobei grundsätzlich ein Bereich von 30° bis 60° vorgesehen sein kann. Ferner ist an beiden Schmalseiten 47 und 49 eine gleiche Anzahl von Einkerbungen 37 ausgebildet, wobei jeder der Einkerbungen 37 an der ersten Schmalseite 47 eine entsprechend ausgebildete Einkerbung 37 an der zweiten Schmalseite 49 zugeordnet ist, die sich bezüglich der Längsachse L auf derselben Höhe befindet (vgl. insbesondere Fig. 3B). Dies kann beispielsweise eine rotationssymmetrische Ausbildung des Schlüssels 33 bezüglich Drehungen um 180° ermöglichen (Wendeschlüssel).

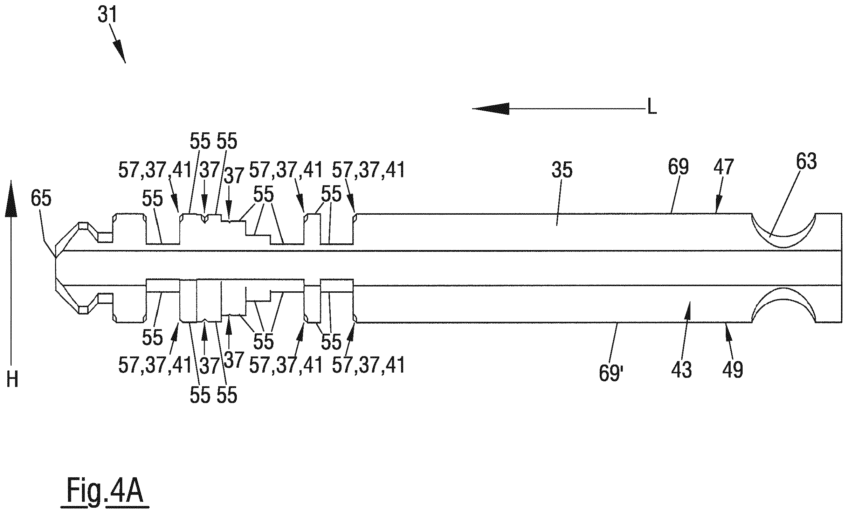

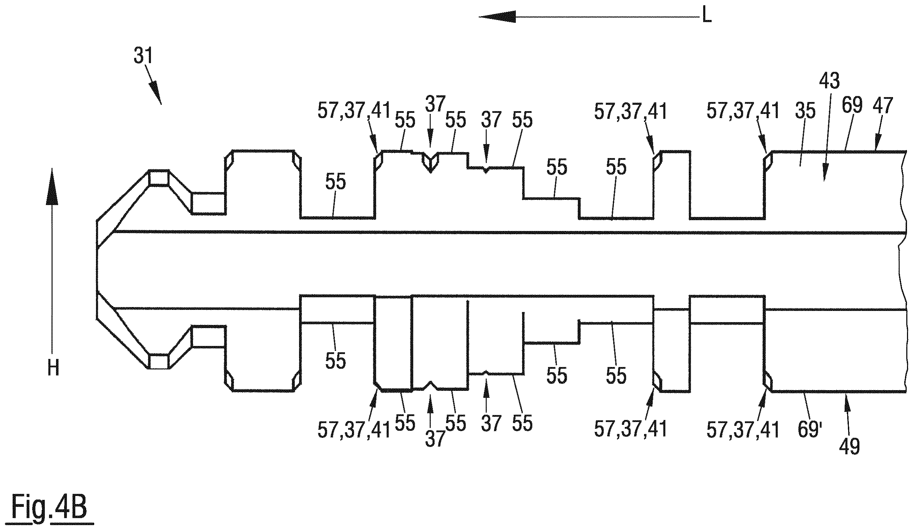

Ferner stellen die Einkerbungen 37 bezüglich der Erstreckung des Schlüsselschafts 35 bzw. der Breitseiten 43 und 45 entlang der Hochachse H lediglich geringfügige Einschnitte oder Einstiche dar, deren Tiefe weniger als 15% der gesamten Höhe des Schlüsselschafts 35 entlang der Hochachse H beträgt. Das Anbringen der Einkerbungen 37 an dem Schlüsselschaft 35 geht daher mit einer lediglich geringfügigen Anpassung desselben einher, so dass insbesondere das Anbringen von Antriebsschrägen 55 bzw. die Betätigung eines Scheibenzylinders 10 mittels des aus dem Schlüsselrohling 31 hergestellten Schlüssels 33 nicht beeinträchtigt wird (vgl. auch Fig. 4A bis 5D).

Im Zuge der weiteren Bearbeitung des Schlüsselrohlings 31 zum Herstellen des Schlüssels 33 können in der Folge insbesondere die Antriebsschrägen 55 an dem Schlüsselrohling 31 angebracht werden, um eine Kodierung des Schlüssels 33 zum Sortieren der Scheibenzuhaltungen 16 zu schaffen. Wie die Fig. 4A bis 5D zeigen, bilden diese Antriebsschrägen 55 Vertiefungen gegenüber dem Rücken 69 bzw. 69' des Schlüsselschafts 35 und sind bezüglich der Längsachse L zwischen den Einkerbungen 37 ausgebildet. Die Antriebsschrägen 55 weisen einen planen Antriebsbereich 59 auf, um die Scheibenzuhaltungen 16 des Scheibenzylinders 10 antreiben zu können. In einem Übergangsbereich zu der jeweiligen Schmalseite 47 oder 49 können die Antriebsschrägen hingegen eine gekrümmte oder abgerundete Form aufweisen, um gleichmäßig in die Schmalseite 47 oder 49 übergehen zu können. Beispielsweise können die Antriebsschrägen 55 durch Fräsen an dem Schlüsselrohling 31 angebracht werden.

Einige der Antriebsschrägen 55 erstrecken sich bezüglich der Hochachse H bis zu dem jeweiligen Rücken 69 oder 69', während andere Antriebsschrägen 55 insgesamt gegenüber den Rücken 69 und 69' vertieft sind (vgl. Fig. 4A bis 5D). Die Rücken 69 und 69' weisen dabei Abschrägungen 57 auf, welche Kanten bzw. Fasen der sich bis zu den Rücken 69 bzw. 69' erstreckenden Antriebsschrägen 55 bilden.

Die Abschrägungen 57 sind schräg in einem Winkel von 45° zu der Längsachse L ausgerichtet und nehmen in ihrer Höhe bezüglich der Hochachse H entlang der Längsachse L von der Schlüsselspitze 65 in Richtung des Verbindungsabschnitts 63 bzw. des Griffabschnitts 67 zu. Dadurch können die Abschrägungen 57 ein Einführen des Schlüssels 33 in einem Schlüsselkanal 28 eines Scheibenzylinders 10 unterstützen, so dass eine leichtgängige Betätigung des Scheibenzylinders 10 erreicht werden kann. Ferner können durch diese Abschrägungen 57 bei gängigen Schlüsseln bzw. Schlüsselrohlingen rechtwinklig ausgebildete Kanten der gefrästen Antriebsschrägen 55 an den Rücken 69 bzw. 69' abgeschrägt werden, um die Handhabung des Schlüssels 33 komfortabler gestalten und scharfe Kanten vermeiden zu können.

Wie sich insbesondere aus dem Vergleich der Fig. 3A bis 3C mit den Fig. 4A bis 5D ergibt, sind diejenigen der Antriebsschrägen 55, welche sich bis zu den Rücken 69 und 69' erstrecken, als Einschnitte in die zuvor an dem Schlüsselrohling 31 ausgebildeten Einkerbungen 37 ausgeführt, so dass die Abschrägungen 57 von jeweiligen zweiten Flanken 41 der betreffenden Einkerbungen 37 gebildet werden. Die Abschrägungen 57 entstehen somit automatisch beim Anbringen der Antriebsschrägen 55 durch das zuvor erfolgte Anbringen von Einkerbungen 37 an dem Schlüsselrohling 31.

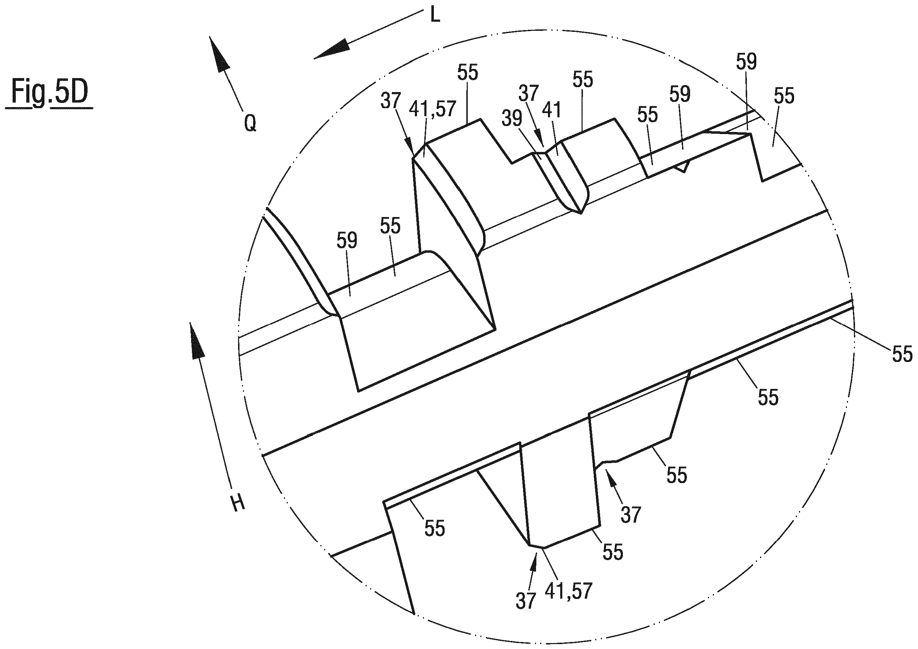

Bei denjenigen der Antriebsschrägen 55, welche sich nicht bis zu dem jeweiligen Rücken 69 oder 69' erstrecken bzw. an welchen keine Abschrägung 57 ausgebildet ist, kann eine Einkerbung 37 an der Außenseite bestehen bleiben (vgl. insbesondere Fig. 5D). Die Antriebsschrägen 55 können somit entlang der Längsachse L eine Erstreckung aufweisen, die größer als der Abstand zwischen zwei aufeinanderfolgenden Einkerbungen 37 ist. Ferner können auch zwei aufeinanderfolgende Antriebsschrägen 55 auf einer gleichen Höhe bezüglich der Hochachse H abschließen, so dass eine Einkerbung 37 bestehen bleiben kann. Durch solche an dem Rücken des Schlüssels 33 verbleibende Einkerbungen 37 entstehen jedoch aufgrund der geneigten Ausbildung der Flanken 39 und 41 sowie der geringe Tiefe der Einkerbungen 37 keinerlei Einschränkungen hinsichtlich der Nutzung oder Handhabung des Schlüssels 33. Die Einkerbungen 37 stehen somit einer variablen Kodierung des Schlüssels 33 mittels verschieden ausgerichteter und ausgebildeter Antriebsschrägen 55 nicht entgegen.

Das Anbringen von sich quer zu der Längsachse L erstreckenden Einkerbungen 37 an dem Schlüsselrohling 31 kann es somit auf einfache Weise ermöglichen, Abschrägungen 57 bzw. Fasen an dem aus dem Schlüsselrohling 31 hergestellten bzw. herzustellenden Schlüssel 33 auszubilden und scharfe Kanten an den Rücken 69 und 69' des Schlüsselschafts 35 zu vermeiden. Die Handhabung und das Verwenden des Schlüssels 33 zum Betätigen des Scheibenzylinders 10 können dadurch komfortabel gestaltet werden.

### Bezugszeichenliste

- 10: Scheibenzylinder
- 12: Zylindergehäuse
- 14: Scheibengehäuse
- 15: Sicherungsscheibe
- 16: Scheibenzuhaltung
- 18: Aufnahmeöffnung
- 19: Schlüsseleinführöffnung
- 20: Sperrausnehmung
- 22: Sperrstift
- 24: Schlüssel
- 24': Schlüsselrohling
- 25: Schlüsselschaft
- 26: Antriebsschräge
- 28: Schlüsselkanal
- 30: Kopplungsabschnitt
- 31: Schlüsselrohling
- 32: Schlitz
- 33: Schlüssel
- 34: Sperrstiftaufnahmevertiefung
- 35: Schlüsselschaft
- 36: Zwischenscheibe
- 37: Einkerbung
- 38, 38a: Umfangsausnehmung
- 39: erste Flanke
- 40: Anschlagabschnitt
- 41: zweite Flanke
- 42: Vorsprung
- 43: erste Breitseite
- 44: Fixierausnehmung
- 45: zweite Breitseite
- 46: Kernstift
- 47: erste Schmalseite
- 49: zweite Schmalseite
- 51: erster Endabschnitt
- 53: zweiter Endabschnitt
- 55: Antriebsschräge
- 57: Abschrägung
- 59: Antriebsbereich
- 61: Einschnitt
- 63: Verbindungsabschnitt
- 65: Schlüsselspitze
- 67: Griffabschnitt
- 69: Rücken
- 69': Rücken

- H: Hochachse
- L: Längsachse
- Q: Querrichtung
- S: Schlüsselachse
- Z: Zylinderachse

## Patentansprüche

1. Schlüsselrohling (31) zum Herstellen eines Schlüssels (33) für einen Scheibenzylinder (10) mit drehbaren Scheibenzuhaltungen (16),
mit einem Schlüsselschaft (35), der sich entlang einer Längsachse (L) erstreckt,
wobei der Schlüsselschaft (35) mehrere sich quer zu der Längsachse (L) erstreckende Einkerbungen (37) aufweist, die in gleichem Abstand zueinander verlaufen und dieselbe Tiefe besitzen,
**dadurch gekennzeichnet, dass**
die Einkerbungen (37) in einer Schnittebene, die parallel zu der Längsachse (L) des Schlüsselschafts (35) verläuft, V-förmig sind.

2. Schlüsselrohling (31) nach Anspruch 1,
wobei die Einkerbungen (37) sich quer zu der Längsachse (L) des Schlüsselschafts (35) geradlinig oder bezüglich der Längsachse (L) gekrümmt erstrecken; und/oder
wobei jede der Einkerbungen (37) in einer Normalebene zu der Längsachse (L) verläuft.

3. Schlüsselrohling (31) nach Anspruch 1 oder 2,
wobei die Einkerbungen (37) in einer Schnittebene, die parallel zu der Längsachse (L) des Schlüsselschafts (35) verläuft, zwei Flanken (39, 41) bilden, die zu der Längsachse (L) des Schlüsselschafts (35) in einem spitzen Winkel stehen, wobei der Winkel insbesondere in einem Bereich von 30° bis 60° liegt und vorzugsweise 45° beträgt.

4. Schlüsselrohling (31) nach einem der vorhergehenden Ansprüche, wobei die Tiefe der Einkerbungen (37) entlang einer senkrecht zu der Längsachse (L) stehenden Hochachse (H) des Schlüsselschafts (35) höchstens 15% der Höhe des Schlüsselschafts (35) beträgt.

5. Schlüsselrohling (31) nach einem der vorhergehenden Ansprüche, wobei der Schlüsselschaft (35) zwei einander entgegengesetzte, sich entlang der Längsachse (L) erstreckende Breitseiten (43, 45) und zwei einander entgegengesetzte, sich entlang der Längsachse (L) erstreckende Schmalseiten (47, 49) aufweist,
wobei die Einkerbungen (37) an zumindest einer der Schmalseiten (47, 49) gebildet sind, insbesondere an beiden Schmalseiten (47, 49) des Schlüsselschafts (35).

6. Schlüsselrohling (31) nach Anspruch 5,
wobei die zumindest eine Schmalseite (47, 49) an einem ersten Endabschnitt (51) in die eine Breitseite (43) und an einem zweiten Endabschnitt (53) in die andere Breitseite (45) übergeht, wobei sich die Einkerbungen (37) quer über die Schmalseite (47, 49) von dem ersten Endabschnitt (51) zu dem zweiten Endabschnitt (53) erstrecken.

7. Schlüsselrohling (31) nach Anspruch 5 oder 6,
wobei jeder der mehreren an der einen Schmalseite (47) ausgebildeten Einkerbungen (37) eine jeweilige an der anderen Schmalseite (49) entsprechend ausgebildete Einkerbung (37) zugeordnet ist,
wobei die jeweiligen einander zugeordneten Einkerbungen (37) entlang der Längsachse (L) insbesondere auf gleicher Höhe angeordnet sind.

8. Schlüssel (33) zum Betätigen eines Scheibenzylinders (10) mit mehreren drehbaren Scheibenzuhaltungen (16),
mit einem Schlüsselschaft (35), der sich entlang einer Längsachse (L) erstreckt und eine senkrecht zu der Längsachse (L) ausgerichtete Hochachse (H) aufweist,
wobei der Schlüsselschaft (35) mehrere entlang der Längsachse (L) nebeneinander angeordnete Antriebsschrägen (55) zum Antreiben der Scheibenzuhaltungen (16) aufweist, wobei die Antriebsschrägen (55) parallel zu der Längsachse (L) und in unterschiedlichen Winkeln schräg zu der Hochachse (H) des Schlüsselschafts (35) ausgerichtet sind,
wobei die Antriebsschrägen (55) Vertiefungen gegenüber einem Rücken (69, 69') des Schlüsselschafts (35) bilden, und wobei der Rücken (69, 69') Abschrägungen (57) aufweist, die an wenigstens einige der Antriebsschrägen (55) angrenzen.

9. Schlüssel (33) nach Anspruch 8,
wobei die Abschrägungen (57) sich quer zu der Längsachse (L) des Schlüsselschafts (35) erstrecken und schräg zu der Längsachse (L) ausgerichtet sind, insbesondere in einem Winkel, der in einem Bereich von 30° bis 60° liegt und vorzugsweise 45° beträgt; und/oder
wobei die Abschrägungen (57) in einer Schnittebene, die parallel zu der Längsachse (L) des Schlüsselschafts (35) verläuft, in einem spitzen Winkel zu der Längsachse (L) des Schlüsselschafts (35) steht, wobei der Winkel insbesondere in einem Bereich von 30° bis 60° liegt und vorzugsweise 45° beträgt.

10. Schlüssel (33) nach Anspruch 8 oder 9,
wobei die Abschrägungen (57) sich quer zu der Längsachse (L) des Schlüsselschafts (35) geradlinig oder bezüglich der Längsachse (L) gekrümmt erstrecken; und/oder
wobei jede der Abschrägungen (57) im Wesentlichen in einer Normalebene zu der Längsachse (L) verläuft.

11. Schlüssel (33) nach einem der Ansprüche 8 bis 10,
wobei die Tiefe der Abschrägungen (57) entlang der Hochachse (H) des Schlüsselschafts (35) höchstens 15% der Höhe des Schlüsselschafts (35) beträgt; und/oder
wobei jede der Antriebsschrägen (55) einen planen Antriebsbereich (59) aufweist.

12. Schlüssel (33) nach einem der Ansprüche 8 bis 11,
wobei der Schlüsselschaft (35) zwei einander entgegengesetzte, sich entlang der Längsachse (L) erstreckende Breitseiten (43, 45) und zwei einander entgegengesetzte, sich entlang der Längsachse (L) erstreckende Schmalseiten (47, 49) aufweist,
wobei die Abschrägungen (57) an zumindest einer der Schmalseiten (47, 49) gebildet sind, insbesondere an beiden Schmalseiten (47, 49) des Schlüsselschafts (35).

13. Zylinderschloss mit einem Scheibenzylinder (10) und einem Schlüssel (33) nach einem der Ansprüche 8 bis 12,
wobei der Scheibenzylinder (10) entlang einer Zylinderachse (Z) mehrere um die Zylinderachse (Z) drehbare Scheibenzuhaltungen (16) und einen parallel zu der Zylinderachse (Z) ausgerichteten und radial zu der Zylinderachse (Z) versetzbaren Sperrstift (22) aufweist, wobei jede Scheibenzuhaltung (16) eine zentrale Aufnahmeöffnung (18) zur Aufnahme des Schlüssels (33) und eine Umfangsausnehmung (20) zur Aufnahme des Sperrstifts (22) aufweist.

14. Verfahren zum Herstellen eines Schlüsselrohlings (31), der zum Herstellen eines Schlüssels (33) für einen Scheibenzylinder (10) mit drehbaren Scheibenzuhaltungen (16) dient,
mit den Schritten:
Bereitstellen eines Schlüsselschafts (35), der sich entlang einer Längsachse (L) erstreckt; und
Anbringen von mehreren Einkerbungen (37) an dem Schlüsselschaft (35), die sich quer zu der Längsachse (L) erstrecken, in gleichem Abstand zueinander verlaufen und dieselbe Tiefe besitzen,
**dadurch gekennzeichnet, dass**
die Einkerbungen (37) in einer Schnittebene, die parallel zu der Längsachse (L) des Schlüsselschafts (35) verläuft, V-förmig sind,
wobei der Schlüsselrohling (31) insbesondere nach einem der Ansprüche 1 bis 7 ausgebildet wird.

15. Verfahren zum Herstellen eines Schlüssels (33) zum Betätigen eines Scheibenzylinders (10) mit mehreren drehbaren Scheibenzuhaltungen (16), mit den Schritten:
Herstellen eines Schlüsselrohlings (31) gemäß einem Verfahren nach Anspruch 14, wobei der Schlüsselschaft (35) eine senkrecht zu der Längsachse (L) ausgerichtete Hochachse (H) aufweist; und
Anbringen von mehreren entlang der Längsachse (L) nebeneinander angeordnete Antriebsschrägen (55), die parallel zu der Längsachse (L) und in unterschiedlichen Winkeln schräg zu der Hochachse (H) des Schlüsselschafts (35) ausgerichtet sind, wobei die Position der Antriebsschrägen (55) derart gewählt wird, dass zumindest einige der Antriebsschrägen (55) Einschnitte (61) in die Einkerbungen (37) bilden und dass zumindest einige der Einkerbungen (37) hierdurch an die Antriebsschrägen (55) angrenzende Abschrägungen (57) bilden, wobei die Antriebsschrägen (55) und/oder die Abschrägungen (57) insbesondere wie bei einem Schlüssel (33) nach einem der Ansprüche 8 bis 12 ausgebildet werden.

## Claims

1. A key blank (31) for manufacturing a key (33) for a disk cylinder (10) having rotatable disk tumblers (16),
said key blank (31) comprising a key shaft (35) which extends along a longitudinal axis (L),
wherein the key shaft (35) has a plurality of notches (37) which extend transversely to the longitudinal axis (L), which extend at equal spacings from one another, and which have the same depth,
**characterized in that**
the notches (37) are V-shaped in a sectional plane which extends in parallel with the longitudinal axis (L) of the key shaft (35).

2. A key blank (31) according to claim 1,
wherein the notches (37), in a direction transverse to the longitudinal axis (L) of the key shaft (35), extend in a straight line or in a curved manner with respect to the longitudinal axis (L); and/or
wherein each of the notches (37) extends in a normal plane to the longitudinal axis (L).

3. A key blank (31) according to claim 1 or 2,
wherein the notches (37) form two flanks (39, 41) in a sectional plane which extends in parallel with the longitudinal axis (L) of the key shaft (35), said two flanks (39, 41) being oriented at an acute angle to the longitudinal axis (L) of the key shaft (35), wherein the angle is in particular in a range from 30° to 60° and preferably amounts to 45°.

4. A key blank (31) according to any one of the preceding claims,
wherein the depth of the notches (37) along a vertical axis (H) of the key shaft (35) extending perpendicularly to the longitudinal axis (L) amounts to at most 15% of the height of the key shaft (35).

5. A key blank (31) according to any one of the preceding claims,
wherein the key shaft (35) has two mutually opposed broad sides (43, 45) extending along the longitudinal axis (L) and two mutually opposed narrow sides (47, 49) extending along the longitudinal axis (L),
wherein the notches (37) are formed at at least one of the narrow sides (47, 49), in particular at both narrow sides (47, 49) of the key shaft (35).

6. A key blank (31) according to claim 5,
wherein the at least one narrow side (47, 49) merges into the one broad side (43) at a first end section (51) and into the other broad side (45) at a second end section (53), wherein the notches (37) extend transversely across the narrow side (47, 49) from the first end section (51) to the second end section (53).

7. A key blank (31) according to claim 5 or 6,
wherein each of the plurality of notches (37) formed at the one narrow side (47) has a respective notch (37) correspondingly formed at the other narrow side (49) associated with it,
wherein the respective mutually associated notches (37) are in particular arranged at the same level along the longitudinal axis (L).

8. A key (33) for actuating a disk cylinder (10) having a plurality of rotatable disk tumblers (16),
said key (33) comprising a key shaft (35) which extends along a longitudinal axis (L) and which has a vertical axis (H) oriented perpendicular to the longitudinal axis (L),
wherein the key shaft (35) has a plurality of drive slopes (55) arranged next to one another along the longitudinal axis (L) for driving the disk tumblers (16), wherein the drive slopes (55) are aligned in parallel with the longitudinal axis (L) and are oriented at different angles obliquely to the vertical axis (H) of the key shaft (35),
wherein the drive slopes (55) form recesses with respect to a back (69, 69') of the key shaft (35), and wherein the back (69, 69') has chamfers (57) which adjoin at least some of the drive slopes (55).

9. A key (33) according to claim 8,
wherein the chamfers (57) extend transversely to the longitudinal axis (L) of the key shaft (35) and are oriented obliquely to the longitudinal axis (L), in particular at an angle which is in a range from 30° to 60° and which preferably amounts to 45°; and/or
wherein the chamfers (57) are oriented at an acute angle to the longitudinal axis (L) of the key shaft (35) in a sectional plane which extends in parallel with the longitudinal axis (L) of the key shaft (35), wherein the angle is in particular in a range from 30° to 60° and preferably amounts to 45°.

10. A key (33) according to claim 8 or 9,
wherein the chamfers (57), in a direction transverse to the longitudinal axis (L) of the key shaft (35), extend in a straight line or in a curved manner with respect to the longitudinal axis (L); and/or
wherein each of the chamfers (57) substantially extends in a normal plane to the longitudinal axis (L).

11. A key (33) according to any one of the claims 8 to 10,
wherein the depth of the chamfers (57) along the vertical axis (H) of the key shaft (35) amounts to at most 15% of the height of the key shaft (35), and/or wherein each of the drive slopes (55) has a planar drive region (59).

12. A key (33) according to any one of the claims 8 to 11,
wherein the key shaft (35) has two mutually opposed broad sides (43, 45) extending along the longitudinal axis (L) and two mutually opposed narrow sides (47, 49) extending along the longitudinal axis (L),
wherein the chamfers (57) are formed at at least one of the narrow sides (47, 49), in particular at both narrow sides (47, 49) of the key shaft (35).

13. A cylinder lock comprising a disk cylinder (10) and a key (33) according to any one of the claims 8 to 12,
wherein the disk cylinder (10) has a plurality of disk tumblers (16) along a cylinder axis (Z) that are rotatable about the cylinder axis (Z) and a blocking pin (22) which is aligned in parallel with the cylinder axis (Z) and which is displaceable radially to the cylinder axis (Z), wherein each disk tumbler (16) has a central reception opening (18) for receiving the key (33) and a peripheral cut-out (20) for receiving the blocking pin (22).

14. A method of manufacturing a key blank (31) which serves for the manufacture of a key (33) for a disk cylinder (10) having rotatable disk tumblers (16),
comprising the steps:
providing a key shaft (35) which extends along a longitudinal axis (L); and
forming a plurality of notches (37) at the key shaft (35) that extend transversely to the longitudinal axis (L), that extend at equal spacings from one another, and that have the same depth,
**characterized in that**
the notches (37) are V-shaped in a sectional plane which extends in parallel with the longitudinal axis (L) of the key shaft (35);
wherein the key blank (31) is in particular configured according to any one of the claims 1 to 7.

15. A method of manufacturing a key (33) for actuating a disk cylinder (10) having a plurality of rotatable disk tumblers (16),
comprising the steps:
manufacturing a key blank (31) in accordance with a method according to claim 14, wherein the key shaft (35) has a vertical axis (H) oriented perpendicular to the longitudinal axis (L); and
forming a plurality of drive slopes (55) which are arranged next to one another along the longitudinal axis (L), which are aligned in parallel with the longitudinal axis (L), and which are oriented at different angles obliquely to the vertical axis (H) of the key shaft (35), wherein the position of the drive slopes (55) is selected such that at least some of the drive slopes (55) form cuts (61) into the notches (37) and such that at least some of the notches (37) hereby form chamfers (57) adjoining the drive slopes (55), wherein the drive slopes (55) and/or the chamfers (57) are in particular formed as in a key (33) according to any one of the claims 8 to 12.

## Revendications

1. Ebauche de clé (31) destinée à fabriquer une clé (33) pour un cylindre à disques (10) ayant des gâchettes rotatives (16) en forme de disques, comprenant une tige de clé (35) qui s'étend le long d'un axe longitudinal (L), la tige de clé (35) présentant plusieurs encoches (37) qui s'étendent transversalement à l'axe longitudinal (L) et qui sont équidistantes les unes des autres et qui ont la même profondeur,
**caractérisée en ce que** les encoches (37) sont en forme de V dans un plan de coupe qui s'étend parallèlement à l'axe longitudinal (L) de la tige de clé (35).

2. Ebauche de clé (31) selon la revendication 1,
dans laquelle les encoches (37) s'étendent transversalement à l'axe longitudinal (L) de la tige de clé (35), de manière rectiligne ou incurvée par rapport à l'axe longitudinal (L) ; et/ou
chacune des encoches (37) s'étend dans un plan normal à l'axe longitudinal (L).

3. Ebauche de clé (31) selon la revendication 1 ou 2,
dans laquelle les encoches (37) forment, dans un plan de coupe parallèle à l'axe longitudinal (L) de la tige de clé (35), deux flancs (39, 41) qui forment un angle aigu avec l'axe longitudinal (L) de la tige de clé (35), l'angle étant en particulier compris dans une plage de 30° à 60° et étant de préférence de 45°.

4. Ebauche de clé (31) selon l'une des revendications précédentes,
dans laquelle la profondeur des encoches (37) le long d'un axe vertical (H) de la tige de clé (35) perpendiculaire à l'axe longitudinal (L) est au maximum égale à 15 % de la hauteur de la tige de clé (35).

5. Ebauche de clé (31) selon l'une des revendications précédentes,
dans laquelle la tige de clé (35) présente deux grands côtés (43, 45) opposés l'un à l'autre et s'étendant le long de l'axe longitudinal (L) et deux petits côtés (47, 49) opposés l'un à l'autre et s'étendant le long de l'axe longitudinal (L),
les encoches (37) sont formées sur au moins l'un des petits côtés (47, 49), en particulier sur les deux petits côtés (47, 49) de la tige de clé (35).

6. Ebauche de clé (31) selon la revendication 5,
dans laquelle ledit au moins un petit côté (47, 49) se prolonge par un grand côté (43) au niveau d'une première portion d'extrémité (51) et se prolonge par l'autre grand côté (45) au niveau d'une deuxième portion d'extrémité (53), les encoches (37) s'étendant transversalement sur le petit côté (47, 49) depuis la première portion d'extrémité (51) jusqu'à la deuxième portion d'extrémité (53).

7. Ebauche de clé (31) selon la revendication 5 ou 6,
dans laquelle à chacune de la pluralité d'encoches (37) formées sur l'un des petits côtés (47) est associée une encoche respective (37) formée de manière correspondante sur l'autre petit côté (49),
les encoches (37) respectives associées les unes aux autres sont disposées en particulier à la même hauteur le long de l'axe longitudinal (L).

8. Clé (33) pour actionner un cylindre à disques (10) comportant plusieurs gâchettes rotatives (16) en forme de disques,
comprenant une tige de clé (35) qui s'étend le long d'un axe longitudinal (L) et qui présente un axe vertical (H) orienté perpendiculairement à l'axe longitudinal (L),
dans laquelle la tige de clé (35) présente plusieurs biseaux d'entraînement (55) disposés les uns à côté des autres le long de l'axe longitudinal (L) et destinés à entraîner les gâchettes (16) en forme de disques, les biseaux d'entraînement (55) sont orientés parallèlement à l'axe longitudinal (L) et selon différents angles en oblique par rapport à l'axe vertical (H) de la tige de clé (35),
les biseaux d'entraînement (55) forment des creux par rapport à un dos (69, 69') de la tige de clé (35), et le dos (69, 69') présente des chanfreins (57) qui sont adjacents à au moins certains des biseaux d'entraînement (55).

9. Clé (33) selon la revendication 8,
dans laquelle les chanfreins (57) s'étendent transversalement à l'axe longitudinal (L) de la tige de clé (35) et sont orientés en oblique par rapport à l'axe longitudinal (L), en particulier selon un angle qui est compris dans une plage de 30° à 60° et qui est de préférence de 45° ; et/ou les chanfreins (57) forment, dans un plan de coupe parallèle à l'axe longitudinal (L) de la tige de clé (35), un angle aigu avec l'axe longitudinal (L) de la tige de clé (35), ledit angle étant en particulier compris dans une plage de 30° à 60° et étant de préférence de 45°.

10. Clé (33) selon la revendication 8 ou 9,
dans laquelle les chanfreins (57) s'étendent transversalement à l'axe longitudinal (L) de la tige de clé (35), de manière rectiligne ou incurvée par rapport à l'axe longitudinal (L) ; et/ou
chacun des chanfreins (57) s'étend sensiblement dans un plan normal à l'axe longitudinal (L).

11. Clé (33) selon l'une des revendications 8 à 10,
dans laquelle la profondeur des chanfreins (57) le long de l'axe vertical (H) de la tige de clé (35) est au maximum égale à 15 % de la hauteur de la tige de clé (35) ; et/ou
chacun des biseaux d'entraînement (55) présente une zone d'entraînement plane (59).

12. Clé (33) selon l'une des revendications 8 à 11,
dans laquelle la tige de clé (35) présente deux grands côtés opposés (43, 45) s'étendant le long de l'axe longitudinal (L) et deux petits côtés opposés (47, 49) s'étendant le long de l'axe longitudinal (L),
les chanfreins (57) sont formés sur l'un au moins des petits côtés (47, 49), en particulier sur les deux petits côtés (47, 49) de la tige de clé (35).

13. Serrure à cylindre comprenant un cylindre à disques (10) et une clé (33) selon l'une des revendications 8 à 12,
dans laquelle le cylindre à disques (10) présente, le long d'un axe de cylindre (Z), plusieurs gâchettes (16) en forme de disques qui peuvent tourner autour de l'axe de cylindre (Z) et une goupille de blocage (22) qui est orientée parallèlement à l'axe de cylindre (Z) et peut être déplacée radialement par rapport à l'axe de cylindre (Z), chaque gâchette (16) en forme de disque présentant une ouverture de réception centrale (18) pour recevoir la clé (33) et un évidement périphérique (20) pour recevoir la goupille de blocage (22).

14. Procédé de fabrication d'une ébauche de clé (31) qui sert à fabriquer une clé (33) pour un cylindre à disques (10) ayant des gâchettes rotatives (16) en forme de disques, comprenant les étapes consistant à :
fournir une tige de clé (35) qui s'étend le long d'un axe longitudinal (L) ; et
ménager plusieurs encoches (37) sur la tige de clé (35), qui s'étendent transversalement à l'axe longitudinal (L), qui sont équidistantes les unes des autres et qui ont la même profondeur,
**caractérisé en ce que**
les encoches (37) sont en forme de V dans un plan de coupe qui s'étend parallèlement à l'axe longitudinal (L) de la tige de clé (35),
l'ébauche de clé (31) étant réalisée en particulier selon l'une des revendications 1 à 7.

15. Procédé de fabrication d'une clé (33) destinée à actionner un cylindre à disques (10) ayant plusieurs gâchettes rotatives (16) en forme de disques, comprenant les étapes consistant à :
fabriquer une ébauche de clé (31) par un procédé selon la revendication 14, la tige de clé (35) présentant un axe vertical (H) orienté perpendiculairement à l'axe longitudinal (L) ; et
réaliser plusieurs biseaux d'entraînement (55) disposés les uns à côté des autres le long de l'axe longitudinal (L), qui sont orientés parallèlement à l'axe longitudinal (L) et selon différents angles en oblique par rapport à l'axe vertical (H) de la tige de clé (35), la position des biseaux d'entraînement (55) étant choisie de telle sorte qu'au moins certains des biseaux d'entraînement (55) forment des entailles (61) dans les encoches (37) et qu'au moins certaines des encoches (37) forment ainsi des chanfreins (57) adjacents aux biseaux d'entraînement (55), les biseaux d'entraînement (55) et/ou les chanfreins (57) étant réalisés en particulier de la même manière que dans une clé (33) selon l'une des revendications 8 à 12.
